# EUROPÄISCHE PATENTANMELDUNG

(11) **EP 1 560 435 A1**
(43) Veröffentlichungstag der Anmeldung: **03.08.2005**
(21) Anmeldenummer: 04002000.0
(22) Anmeldetag: 29.01.2004
(51) Int. Cl.: H04N 7/16, H04N 7/173, H04N 5/445

(54) **Verfahren zur Unterstützung von Diensten in einem IP-basierten Video-Netz auf Basis teilnehmergesteuerter Statusinformationen**

(71) Anmelder: SIEMENS AKTIENGESELLSCHAFT, 80333 München (DE)
(72) Erfinder: Scheuer, Axel, 80804 München (DE); Unger, Stefan, 82008 Unterhaching (DE)

(57) **Zusammenfassung**

IP-basierte Video-Netze bieten typischerweise Unterhaltungsdienste, die mittels Video-Streaming Filme und andere Video-Daten zum Teilnehmer übertragen. Das Endgerät das diese Video-Daten empfängt ist eine sogenannte Set Top Box (STB), die an ein TV-Gerät angeschlossen wird.

Auf der Suche nach neuen Geschäftsfeldern besteht seitens der Betreiber solcher Netze Interesse auch weitere Dienste anzubieten. Das erfindungsgemäße Verfahren beschreibt wie Presence-basierte Dienste, z.B. Instant Messaging, für die Teilnehmer von solchen Video-Netzen angeboten werden können.

## Beschreibung

### Punkt 1: Welches Problem liegt der Erfindung zugrunde?

IP-basierte Video-Netze bieten typischerweise Unterhaltungsdienste die mittels Video-Streaming Filme und andere Video-Daten zum Teilnehmer übertragen. Das Endgerät, das diese Video-Daten empfängt, ist eine sogenannte Set Top Box (STB), die an ein TV-Gerät angeschlossen wird. IP-basierte Video-Netze mit digitaler Übertragung von Video-Daten können unterschiedliche Topologien haben, z.B. können auf DSL Technologie oder auf Kabelnetzen basieren.
Auf der Suche nach neuen Geschäftsfeldern besteht seitens der Betreiber solcher Netze Interesse auch weitere Dienste anzubieten. Das erfindungsgemäße Verfahren beschreibt wie Presence-basierte Dienste für die Teilnehmer von solchen Video-Netzen angeboten werden können unter Berücksichtigung spezieller Daten des Netzes. Beispiele für einen Presencebasierte Dienste sind Instant Messaging (d.h. das Austauschen von Textnachrichten in Echtzeit) zwischen den Teilnehmern der Video-Netzes über das TV-Gerät oder die automatische Initiierung einer Video-Konferenz bei Verfügbarkeit der erforderlichen Teilnehmer oder das gemeinsame Spielen von Online Spielen mit registrierten Teilnehmern einer Buddy-List..

### Punkt 2: Wie wurde dieses Problem bisher gelöst?

Heutige Lösungen von Video-Netzen bieten bisher keine integrierten Dienste an.
Einfache Lösungen sind denkbar indem parallel zu den Endgeräten TV-Gerät plus STB zusätzliche PCs an das Netz angeschlossen werden, die dann zwischen den PCs Kommunikationsdienste erlauben.
Weiterhin gibt es Lösungen um an größere Teilnehmergruppen kurze Textmeldungen zu senden, die über das aktuelle am TV-Gerät sichtbare Video-Bild geblendet werden, z.B. Unwetter Warnungen. Dies sind jedoch keine individuellen Meldung an bestimmte Teilnehmer und werden nur vom zentralen Control Server an die Teilnehmergruppe verteilt.
Die Unterstützung von Kommunikationsdiensten wie z.B. Instant Messaging (IM)/Chat zwischen Teilnehmern eines Video-Netzes unter Berücksichtigung von Presence Informationen ist bisher nicht bekannt.

### Punkt 3: Wie löst die Erfindung das genannte Problem ?

Das erfindungsgemäße Verfahren ermöglicht die Unterstützung von Presence-basierten Kommunikationsdiensten für Teilnehmer eines IP basierten Video-Netzes.
Zur Durchführung des Verfahrens ist der sogenannte Presence Server im Video-Netz wesentlich. Dieser speichert die Presence Information für die Teilnehmer des Video-Netzes. Die Presence-Information der Video-Teilnehmer umfasst Informationen wie z.B.
- der Video-Teilnehmer ist online, d.h. hat seine STB ist aktiv und ist im zentralen Control Server des Video-Netzes registriert und authentifiziert
- unter welcher Adressen ist der Teilnehmer erreichbar (z.B. IP-Adresse oder username@domain)
- welchen Dienst nutzt der Video-Teilnehmer im Moment (z.B. sieht einen über Video on Demand (VoD) gebuchten Film oder spielt online ein Spiel für mehrere Mitspieler auf einem Server des Video-Netzes)
- persönliche Stimmung des Video-Teilnehmers ("will nicht gestört werden", "freue mich über eine Nachricht", "suche Mitspieler")
- Ferner kann der Server auch Listen mit den Adressen und Presenceinformationen von Freunden/früheren Kommunikationspartnern führen (sogenannte "buddy lists"). Aus Sicherheitsgründen enthält der Presence Server Profile für alle Teilnehmer bzw. Presencenutzer. Damit wird gewährleistet, dass z.B. nur registrierte Nutzer Presencedaten anfordern oder übermitteln können oder dass nur Nutzer Daten anfordern können ("watcher") wenn der Nutzer dessen Presencedaten angefordert werden ("presentity") dies erlaubt hat.

Zur Verbesserung der Möglichkeiten des erfindungsgemäßen Verfahrens hat der Presence Server vorteilhafterweise eine Schnittstelle zu dem Control Server des Video-Netzes, der sämtliche Video-Dienste steuert. (Die gebräuchliche Bezeichnung für die Applikation auf dem Control Server für Video-Dienste ist "Middleware"). Der Control Server kennt typischerweise den Status aller laufenden Dienste (→ "sessions") für online Video-Teilnehmer, da dieser u.a. für die Vergebührung und Statistik für die Dienste zuständig ist. Über die Schnittstelle zwischen Presence Server und Control Server kann der Presence Server nähere Informationen zu den von den Video-Teilnehmern genutzten Diensten abfragen, z.B. welcher Video-Teilnehmer welchen Dienst zur Zeit in welcher Detaillierung bzw. Ausgestaltung nutzt. Mit diesen Informationen kann sich der Presence Server z.B. eine Liste aller Teilnehmer erstellen, die zur gleichen Zeit einen bestimmten Film über VoD oder ein bestimmtes Fußballspiel auf einem DVB (Digital Video Broadcast) Kanal sehen.

Weiterhin sind im SW Client auf der STB folgende SW Applikationen integriert

### • Presence User Agent (PUA) :

Diese SW Applikation meldet sich bei dem Presence Server im Netz an sobald der Video-Teilnehmer online ist, d.h. seine STB aktiv ist. Ebenso kann sich der Teilnehmer wieder abmelden ("offline" Status = "not present") oder während einer Video-Session seinen Status ändern. Teil der Anmelde-Daten beim Presence Server sind die oben erwähnten Zusatzinformation wie Stimmung und Informationen über den genutzten Dienst. Weiterhin erlaubt die Applikation die Presence-Status Abfrage von anderen Video-Teilnehmern im Netz beim Presence Server. Eine solche Abfrage kann aufgrund von bestimmten Kriterien erfolgen, z.B. welcher Teilnehmer sieht gerade einen bestimmten Film.
Die Applikation erlaubt die Darstellung des Presence Status des Teilnehmers sowie anderer Teilnehmer (aus seiner "buddy list" oder aus anderen vom Presence Server angebotenen Listen) in dedizierten Fenstern auf dem TV-Gerät.
- Mindestens eine Dienstapplikation, *z.B. Instant Message*/*Chat User Agent (IMUA):*
   Die IMUA-Software-Applikation erlaubt den sofortigen Austausch von Textnachrichten mit anderen Instant Message/Chat User Agents. Je nach Möglichkeiten der Applikation ist eine eins-zu-eins Kommunikation oder auch einen *eins-zu-n* Kommunikation denkbar. Die Applikation ist mit der PUA Applikation gekoppelt, d.h. anhand der Presence-Information bestimmter Teilnehmer kann eine IM/Chat Session mit Teilnehmern die online sind und ggfs. weitere geforderte Kriterien erfüllen gestartet werden.

Heutige STB haben die prinzipielle technische Möglichkeit solche SW-Applikationen in die Client-Software auf der STB zu integrieren. In diesem Fall laufen diese UA-Applikationen direkt auf der STB und kommunizieren mit den Servern im Netz bzw. anderen STB. Die Signalisierungsprotokolle dafür können proprietär oder auch Standard-Protokolle sein. Standard Protokolle für Presence werden z.B. in der IETF unter SIMPLE oder 3GPP PAM standardisiert. Gegebenenfalls müssten für eine erfindungsgemäße Implementierung die Standard-Protokolle erweitert werden falls Video-Netz spezifische Informationen (z.B. Daten über Filme oder DVB-Kanäle) nicht in Standard-Parametern übertragen werden können.

Auch für den Austausch von Instant Messages sowie für die UA könnten Standard-Protokolle (z.B. in der IETF) oder open source Implementierungen (z.B. Jabber) eingesetzt werden.

Als Variante ist das erfindungsgemäße Verfahren auch mit STB denkbar, die nur über einen HTML-fähigen Browser verfügen (sogenannte "Thin Clients") und die eine Kommunikation mit dem zentralen Video Control Server ausschließlich über HTTP unterstützen. In diesem Fall müssen die genannten UA Applikationen auf dem Control Server integriert werden. Die Aktivierung der entsprechenden Prozeduren für die Aktualisierung und Abfrage von Presence Daten beim Presence Server durch den Video-Teilnehmer muss dann auf HTML Seiten abgebildet werden die dann entsprechende Steuerinformationen an die PUA Applikation weitergeben. Die PUA Applikation kommuniziert dann mit dem Presence Server wie oben beschrieben. Ebenso kann der Austausch von Instant Messages/Chat auf HTML-Seiten abgebildet werden.

Die STB soll weiterhin erlauben , dass die Textfelder in denen empfangene oder selbst geschriebene Nachrichten dargestellt werden auf dem TV-Gerät entweder als alleiniges Vollbild oder als Teilbild welches über eine anderes Bild (z.B. Video-Film ) gelegt wird angezeigt werden. Prinzipiell erlaubt die sogenannte "alphablending" Technologie, die von state-of-the-art STB chips unterstützt wird, das Überlagern von TV-Bildern. Somit kann beispielsweise eine STB Applikation wie der PUA Informationen im Format eines TV-Bildes erzeugen und mit einem TV-Signal mischen und das gemischte Bild auf einem TV-Gerät darstellen. Eine Darstellung als Teilbild erlaubt dem Teilnehmer eine IM/Chat Session parallel zu einem laufenden Video-Programm. Ebenso die Online-Status Informationen bzgl. Presence sollen als Vollbild oder überlagertes Bild darstellbar sein.

Zur Texteingabe verfügt die STB typischerweise über ein externes Keyboard, welches entweder schnurlos (z.B. via Infrarot) oder direkt mit einem Kabel anschließbar ist. Ebenso denkbar ist ein "virtuelles" Keyboard, d.h. eine auf dem TV-Gerät dargestellte Tastatur auf der der Teilnehmer mittels Fernbedienung Buchstaben auswählt. Auch vereinfachte Eingabealgorithmen wie der für Mobilfunkendgeräte "T9" Algorithmus sind denkbar.

### Punkt 4: Welche Vorteile hat die Erfindung ?

Das erfindungsgemäße Verfahren erlaubt es, neue Kommunikationsdienste wie z.B. IM/Chat, Presence-gesteuerte Video-Konferenzen oder Online Spiele mit Teilnehmern einer Buddy List zwischen den Teilnehmern eines IP-basierten Video Netzes anzubieten. Der zentrale Presence Server erlaubt nicht nur die Erfassung der Information "welcher Teilnehmer ist z.Zt. online (STB aktiv)", sondern kann auch Video-Netz spezifische Daten erfassen, wie z.B. welchen Dienst nutzt ein angemeldeter Teilnehmer. Damit ist es möglich, beispielsweise IM/Chat Sessions mit Teilnehmern zu starten die gerade den selben Film anschauen oder andere Dienste des Video-Netzes gleichzeitig nutzen . Bei Einblendung der Textein- und ausgabefelder über ein Video-Bild, z.B. im unteren Bereich können Video-Teilnehmer parallel zu einer laufenden Video-Übertragung kommunizieren.

### Optionen:

- Wenn der Presence Server im Video Netz auch die Registrierung von IP-Teilnehmern in anderen Netzen erlaubt, z.B. Mobilfunkteilnehmer mit PUA oder IP-Teilnehmer die im Internet surfen und einen passenden PUA haben, so ist auch eine Presence basierte Kommunikation zwischen diesen Teilnehmern und den Video-Netz Teilnehmern möglich. Voraussetzung dafür sind natürlich kompatible PUA und IMUA Applikationen auf den Endgeräten und im Presence Server. Ebenso muss das Video-Netz die entsprechenden IP-basierten Signalisierungen über ein geeignetes Gateway in das externe IP-Netz ermöglichen.Als Variante wäre auch denkbar dass eine direkte Kommunikation zwischen dem Presence Server des Video-Netzes und anderen Presence Servern stattfindet.
- Der beschriebene Presence Server und der PUA in der STB sind generisch und können mit anderen Kommunikationsdiensten kombiniert werden, z.B. für Presence basieret Video Telphonie oder Video Konferenz - sofern das Video-Netz die technischen Möglichkeiten dafür bietet.

### Punkt 5: Zeichnerische Darstellung von Ausführungsbeispiel(en) der Erfindung

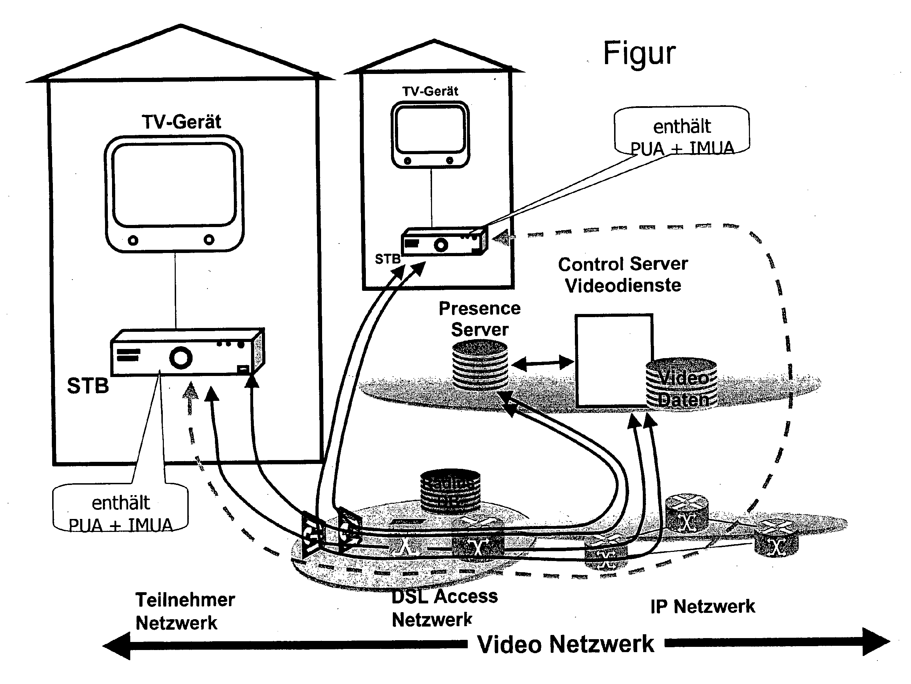

Ein Anwendungsbeispiel für das erfindungsgemäße Verfahren ist in der Figur dargestellt.
Das vereinfachte Beispiel zeigt ein IP-basiertes Video-Netz welches auf Basis eines ADSL Netzes realisiert ist. Die STB der Video Teilnehmer kommunizieren mit dem zentralen Control Server für Video-Dienste. Beispielsweise können mittels EPG (Electronic Programm Guide) Filme für VoD ausgewählt werden. Der Control Server übermittelt die Adressen zu den Servern mit den digitalen Video Daten. Der Control Server überwacht diese laufenden Video-Session und steuert die Vergebührung.
Erfindungsgemäß enthält die SW auf der STB die Applikationen für Presence (PUA) und Instant Messaging (IMUA). Beim Aktiveren der STB aktualisiert der PUA die Presence Daten für den Video Teilnehmer im zentralen Presence Server. Der PUA in der STB holt sich die Presence Daten von anderen Teilnehmern auf Anfrage, z.B. für alle Teilnehmer die in der *Buddy List* eingetragen sind. Diese Presence Daten stellt die PUA Applikation auf Anfrage (z.B. Drücken eines Knopfes auf der STB Fernbedienung) auf dem angeschlossenen TV-Gerät dar.

Der Video Teilnehmer 1 (Video Tln 1) erkennt anhand der Status Information für seine *Buddy List* die ihm angezeigt wird, dass der Video Teilnehmer 2 1 (Video Tln 2) online ist. Durch Auswahl diese Teilnehmers mit seiner STB Fernbedienung kann dieser eine IM Session mit diesem Teilnehmer 2 eröffnen, d.h. es werden über eine IP-basierte Verbindung (gestrichelt, orange dargestellt) IM-Daten gemäß dem implementierten Protokoll zwischen Teilnehmer 1 und Teilnehmer 2 ausgetauscht. Die Textnachrichten werden am TV-Gerät dargestellt. Die Texteingabe erfolgt über eine IR-gesteuertes Keyboard (Keyboard nicht dargestellt).

Abkürzungen:
- IM:: Instant Message
- IMUA:: Instant Message/Chat User Agent
- IP:: Internet Protokoll
- PUA:: Presence User Agent
- STB:: Set Top Box
- SW:: Software
- UA:: User Agent
- VoD:: Video on Demand

## Patentansprüche

**1.** Verfahren zur Unterstützung von Diensten eines IP-basierten Video-Netzes, demgemäß
a) ein Teilnehmer des Video-Netzes auf Wunsch über sein IP-fähiges Endgerät als Nutzer eines Presence-basierten Dienstes bei einem Presence Server registriert wird,
b) der genannte Teilnehmer durch sein IP fähiges Endgerät bei dem Presence Server angemeldet wird, sobald sein Endgerät aktiv wird, wobei im Rahmen der genannten Anmeldung von dem Presence Server Informationen über den Presence-Status des Teilnehmers abgespeichert werden,
c) dem genannten Teilnehmer entsprechende Presence-Informationen über andere Teilnehmer bei einer entsprechenden Abfrage mithilfe seines IP-fähiges Endgerätes vom Presence Server zur Verfügung gestellt werden.

**2.** Verfahren nach Anspruch 1,
**dadurch gekennzeichnet,**
**dass** dem genannten Teilnehmer neben dem Presence-Status auch weitere Video-Netz spezifische Informationen, wie z.B. über tatsächlich genutzten Dienst oder gesehenen Film, übermittelt werden und/oder ausgewertet werden können.

**3.** Verfahren nach Anspruch 1 oder 2,
**dadurch gekennzeichnet,**
**dass** dem genannten Teilnehmer ein Dienst in Abhängigkeit der Presence Informationen, die er mithilfe der genannten Abfrage über andere Teilnehmer erhalten hat, zur Verfügung gestellt wird.

**4.** Verfahren nach einem der Ansprüche 1 bis 3,
**dadurch gekennzeichnet,**
**dass** auch Teilnehmern eines anderen IP basierten Netzes die genannte Anmeldung bei dem Presence Server ermöglicht wird.

**5.** Presence Server, der
a) Presence Daten bezüglich der Teilnehmer eines IP-basierten Video-Netzes speichert,
b) die genannten Presence Daten dem IP-fähigen Endgerät eines Teilnehmer auf Anfrage übermittelt.

**6.** Presence Server nach Anspruch 5, mit
einer Schnittstelle zu einem Control Server zur Steuerung der Video-Dienste des Video-Netzes, über die der Presence Server abfragen kann, welche Details (Features) bzw. Inhalte ein Video-Teilnehmer über den Dienst zur Zeit nutzt.

**7.** IP-fähiges Endgerät eines Videonetzes, das
a) eine Teilnehmer-Anfrage nach Presence-Informationen über mindestens einen anderen Teilnehmer des Video-Netzes an einen zentrale Einrichtung des Videonetzes richtet,
b) aufgrund der genannten Teilnehmer-Anfrage empfangene Presence-Informationen über den mindestens einen anderen Teilnehmer auf dem TV-Gerät des anfragenden Teilnehmers darstellt.

**8.** IP-fähiges Endgerät nach Anspruch 6,
**dadurch gekennzeichnet,**
**dass** es dem genannten anfragenden Teilnehmer ermöglicht, einen Kommunikationsdienst zu mindestens einen anderen Teilnehmer zu starten, über den der anfragende Teilnehmer aufgrund der genannten Anfrage Presence-Informationen erhalten hat.

**9.** IP-fähiges Endgerät nach Anspruch 8,
**dadurch gekennzeichnet,**
**dass** es sich bei dem genannten Kommunikationsdienst um den Dienst "Austausch von Textnachrichten" (Instant messaging) handelt.

**10.** IP-fähiges Endgerät einem der nach Ansprüche 7 bis 9,
**dadurch gekennzeichnet,**
**dass** es sich bei der zentralen Einrichtung um einen Presence Server handelt.

**11.** IP-fähiges Endgerät nach einem der Ansprüche 7 bis 9,
**dadurch gekennzeichnet,**
**dass** es sich bei der zentralen Einrichtung um einen Control Server zum Steuern des Video-Netzes handelt.

**12.** IP-fähiges Endgerät nach einem der Ansprüche 7 bis 11, es die genannte Teilnehmer-Anfrage mittels eines IP-basierten Protokolls durchführt.

**12.** IP-fähiges Endgerät nach Anspruch 11,
**dadurch gekennzeichnet,**
**dass** es sich bei dem IP-basierten Protokoll um das SIP-Protokoll handelt.

**13.** IP-fähiges Endgerät nach Anspruch 11,
**dadurch gekennzeichnet,**
**dass** es sich bei dem IP-basierten Protokoll um das HTTP-Protokoll handelt.

**14.** IP-fähiges Endgerät, mit
einer Applikation (PUA), die angestoßen durch einen ersten Teilnehmer des Videonetzes mittels eines IP-basierten Protokolls von einem Presence Server Presence-Daten mindestens eines anderen Tln holt und diese auf dem TV-Gerät des ersten Teilnehmers darstellt.

**15.** IP-fähiges Endgerät nach Anspruch 7 oder 14,
**dadurch gekennzeichnet,**
**dass** es sich bei dem IP-fähigen Endgerät um eine STB handelt.
